# EUROPÄISCHE PATENTANMELDUNG

(11) **EP 3 217 499 A1**
(43) Veröffentlichungstag der Anmeldung: **13.09.2017**
(21) Anmeldenummer: 17159849.3
(22) Anmeldetag: 08.03.2017
(51) Int. Cl.: H02G 15/34, H02J 3/36

(54) **BEREITSTELLUNG EINER GLEICHSTROM-KABELANLAGE MIT METALLISCHEM RÜCKLEITER UND ENTSPRECHENDE GLEICHSTROM-KABELANLAGE**

(30) Priorität: 09.03.2016 DE 102016002881
(71) Anmelder: nkt cables GmbH & Co. KG, 51061 Köln (DE)
(72) Erfinder: Brakelmann, Heinrich, 47495 Rheinberg (DE); May, Hans-Peter, 51467 Bergisch-Gladbach (DE)
(74) Vertreter: Feder Walter Ebert

(57) **Zusammenfassung**

Es wird eine erdverlegte Gleichstrom-Kabelanlage bereitgestellt, vorzugsweise für Hochspannung, die ohne Erd-Elektroden für die Rückleitung, bzw. ohne kabelgebundenen Rückleiter auskommt und bei der ein metallischer Rückleiter als metallisches Hüllrohr 12 ausgebildet ist, in welches die Gleichstrom-Kabel 10 eingezogen sind. Vorzugsweise ist das metallische Rohr als Stahlrohr mit außenflächigem Korrosionsschutz ausgebildet. Im Stahlrohr können weiterhin Kunststoffrohre 14 zur Aufnahme der Gleichstrom-Kabel 10 eingebracht sein, wobei die Zwischenräume 16 zwischen dem mindestens einen Kunststoffrohr und dem Hüllrohr mit gut wärmeleitfähigem Material verfüllt sind. Neben den Kunststoffrohren können noch Leerrohre im Hüllrohr vorhanden sein. Ein solcher Systemaufbau erlaubt im Fehlerfall den schnellen Austausch ganzer Kabellängen.

## Beschreibung

Die vorliegende Erfindung betrifft die Bereitstellung einer Gleichstrom-Kabelanlage mit Rückleitung des Stromes über einen, außerhalb des Kabels liegenden, metallischen Rückleiter und eine entsprechende Gleichstrom-Kabelanlage.

Die Stromübertragung in einer Gleichstrom-Kabelanlage (auch als HGÜ-Anlage bezeichnet) kann sowohl monopolar als auch bipolar erfolgen. Bei bipolaren HGÜ-Anlage wird jeweils die Hälfte der Energie über einen Pol übertragen, wobei insbesondere ein Kabelpaar verwendet wird.

In der Regel werden zur Überbrückung großer Entfernungen Rückleiter eingesetzt. Diese Rückleiter haben die Funktion, bei Spannungsschwankungen der Umrichteranlagen kleine Ausgleichsströme zu führen. Im Fehlerfall - Ausfall eines Kabels - kann der Rückleiter den Rückstrom des verbleibenden Kabels übernehmen, so dass die halbe Übertragungsleistung der HGÜ-Anlage erhalten bleibt.

Bekanntermaßen wird die Erde als Rückleiter benutzt bzw. bei HGÜ-Anlagen am Meer das Seewasser. Es werden dabei in beiden HGÜ-Anlagen Elektroden in der Erde oder im Meer benötigt.

Aus der DE 4443745 A1 ist bekannt, eine Erdelektrode in einem Bohrloch weit unterhalb der Erdoberfläche anzuordnen. Durch Verwendung der Erde als Rückleiter kann man einen Pol der Freileitung bzw. der Kabelverbindung einsparen und elektrische Verluste vermindern.

Die Verwendung des Erdreichs als Rückleiter wird meist nicht mehr erlaubt, z.B. wegen der Korrosionsgefahren bei vagabundierenden Gleichströmen.

Bei Hochspannungs-Gleichstromübertragung über das Meer ist bekannt, die Elektroden im Salzwasser anzuordnen und im Wesentlichen das Meer selbst als Rückleiter zu nutzen. Im Meer angeordnete Elektroden sind insofern nachteilig, als durch die elektrochemischen Vorgänge an den Elektroden schädliche und/oder aggressive Substanzen entstehen können.

Hiergegen ist schon vorgeschlagen worden, ein Gleichstromkabel so auszugestalten, dass im Schirm und/oder Armierung des Kabels Leiter angeordnet sind, die als metallischer Rückleiter dienen (EP 0938102 A2); so auch US 2576 163 A, WO 2003-046592 A1 oder GB 1 445 938 A. Solche Gleichstromkabel weisen also mindestens einen kabelgebundenen Rückleiter auf und sind jeweils fabrikmäßig hergestellt.

Die Aufgabe der vorliegenden Erfindung besteht darin, eine Gleichstrom-Kabelanlage bereitzustellen, vorzugsweise aber nicht einschränkend für die Erdverlegung, die ohne Elektroden oder kabelgebundenen Rückleitern auskommt.

Die Lösung der Aufgabe findet sich in den Nebenansprüchen, wobei vorteilhafte und ergänzende Ausgestaltungen in den jeweiligen Unteransprüchen formuliert sind.

Es handelt sich um ein Verfahren zur Bereitstellung einer Gleichstrom-Kabelanlage, umfassend mindestens ein Gleichstromkabel und mindestens einen metallischen Rückleiter, wobei das mindestens eine Gleichstromkabel, welches keinen kabelgebundenen Rückleiter aufweist, bereitgestellt wird, weiter wird mindestens ein metallisches Hüllrohr bereitgestellt; und das mindestens eine Gleichstromkabel wird in das als metallischer Rückleiter dienende metallische Hüllrohr eingezogen. Vorzugsweise werden kunststoffisolierte und mit Schutz- und Armierungsmantel umgebene Gleichstromkabel eingesetzt.

Mit dieser mit dem Verfahren bereitgestellten Anordnung kann im Betrieb des Kabels ein Rückleiterstrom über die Rohrwandung des Hüllrohrs geführt werden.

Es wird eine Gleichstrom-Kabelanlage vornehmlich für Hochspannung bereitgestellt, vorzugsweise ausgestaltet als erdverlegtes HVDC-System.

Die Unteransprüche zeigen folgende Merkmale auf, wobei die Merkmale der Unteransprüche - soweit technisch sinnvoll - untereinander kombinierbar sind.

Mit der Erfindung kann eine mehrere Gleichstromkabel umfassende Gleichstrom-Kabelanlage für Hochspannung bereitgestellt werden, wobei die Gleichstromkabel getrennt voneinander in ein oder mehrere metallische Hüllrohre eingezogen werden.

Vorzugsweise kann in dem metallischen Rohr mindestens ein Kunststoffrohr eingebracht werden, in welches das mindestens eine Gleichstromkabel eingezogen wird. Bei diesem Verlegeverfahren können in dem mindestens einen Kunststoffrohr weitere elektrische Leiter bzw. Kabel und auch Leerrohre verlegt werden. In den Leerrohren können zusätzlich - auch später - Reservekabel und auch Rückleiter eingebracht sein. Damit entsteht eine optimale Verfügbarkeit der Kabelanlage.

Bei einer Verfahrensvariante kann auch das mindestens eine Gleichstromkabel in das Hüllrohr eingezogen werden und danach diese Anordnung in den Boden eingebracht werden.

In einer besonderen Ausgestaltung der Erfindung kann die Größe des Leiterquerschnitts des metallischen Rohrs (Rohrwandung) gemäß dem Leiterquerschnitt des in der Übertragungsstrecke eingesetzten Gleichstromkabels entsprechend dem Leitwertverhältnis der beiden Metalle (z.B. Stahl zu Kupfer) angepasst und gewählt werden. Vorzugsweise ist die Rohrwandung in einer Dicke ausgeführt, bei der ihr elektrischer Leitwert im Bereich von 0,9 bis 1,1 des elektrischen Leitwerts des Kabelleiters des Gleichstromkabels ist.

Dabei kann der Rückstrom eines nach Übergang von bipolarem Betrieb zu monopolarem Betrieb verbleibenden Kabels geführt werden. Es verbleibt dann eine Übertragungsleistung, die halb so groß ist, wie bei Normalbetrieb.

Es werden als äußere Hüllrohre Rohre aus Stahl, vorzugsweise ferromagnetische Stahlrohre eingesetzt, die als Leitungskanal zur Aufnahme der Kabelsysteme dienen. Die Außenseite des Rohrs sollte mit Korrosionsschutz versehen sein.

Die Zwischenräume zwischen dem mindestens einen Kunststoffrohr und dem metallischen Hüllrohr können mit gut wärmeleitfähigem Material (zum Beispiel CableCem von Heidelbergcement) verfüllt sein, was ebenfalls als ,innerer' Korrosionsschutz zu bewerten ist.

Das metallische Rohr kann mit besonders großem Innendurchmesser, insbesondere mind. 1m, bevorzugt mind. 1,5 m, besonders bevorzugt mind. 2m, verlegt sein, der dadurch Raum für einen begehbaren Leitungsgang bietet. In Stahlrohren mit großem Innendurchmesser, wie etwa mit Nennweiten von bis zu 3,5 m, kann ein besonders komfortabler begehbarer Leitungsgang ausgebildet sein. Damit wird die Gleichstromübertragungsstrecke eine geschlossene, langgestreckte, begehbare bauliche Anlage mit der Möglichkeit der zugänglichen Lagerung von Versorgungsleitungen und/oder Kabeln. Die Kabeladern sollten in dem Leitungsgang in sicherheits- und betriebsbedingten Abständen verlegt sein.

Zur Einbringung der Stahlrohre in den Boden sind unterschiedliche Möglichkeiten gegeben: offener Graben; halboffene Bohrpressverfahren oder geschlossenes Bohrpressverfahren. Insbesondere unter Nutzung moderner Bohrverfahren kann ein jeweiliges Installationskonzept abschnittsweise grabenlos innerhalb einer unterirdischen baulichen Hülle realisiert werden. Die bauliche Umsetzung ermöglicht es, Kabetantagen praktisch ohne zusätzlichen Trassenbedarf zu realisieren. Mit möglichen Abschnittslängen der Bohrverfahren von mehr als 1 km lassen sich Kabelstrecken mit minimalem Trassenbedarf und minimalen Beeinflussungen in Bauphase und Betrieb errichten.

Die mit der Anmeldung beanspruchten Kabel ohne kabelgebundenen Rückleiter haben den Vorteil, dass diese einen einfacheren (billigeren) Aufbau haben. Der Einsatz dieser Kabel in einem metallischen Hüllrohr hat den Vorteil, dass das äußere Metallrohr einen optimalen mechanischen Schutz gegen äußere Beschädigungen bietet. Zudem werden die äußeren Magnetfelder der Kabel durch das Metallrohr vermindert. Im Fehlerfall kann das Kabelsystem ohne Erdarbeiten schnell ausgetauscht werden.

Das äußere Stahlrohr bietet einen optimalen mechanischen Schutz gegen äußere Beschädigungen, wodurch die Verfügbarkeit entscheidend erhöht und die Ausfallwahrscheinlichkeit der Kabelanlage vermindert wird. Zudem werden die äußeren Magnetfelder der Kabel durch das Stahlrohr (durchaus auch bei Gleichstrom) erheblich vermindert.

Der erfindungsgemäße Systemaufbau erlaubt im Fehlerfall den schnellen Austausch ganzer Kabellängen ohne Erdarbeiten.

Die Erfindung betrifft auch ein HVDC-System bestehend aus mindestens einer bereits beschriebenen Kabelanlage und mindestens einem Umrichter, insbesondere zur Umrichtung von/in HVAC. Bevorzugt verbindet die Gleichstrom-Kabelanlage zwei Umrichter, bevorzugt voneinander entfernte Umrichterstationen, miteinander. Bei einer vorteilhaften Ausgestaltung können in einem gemeinsamen Hüllrohr auch Gleichstromkabel von mindestens zwei HVDC-Systemen verlegt sein.

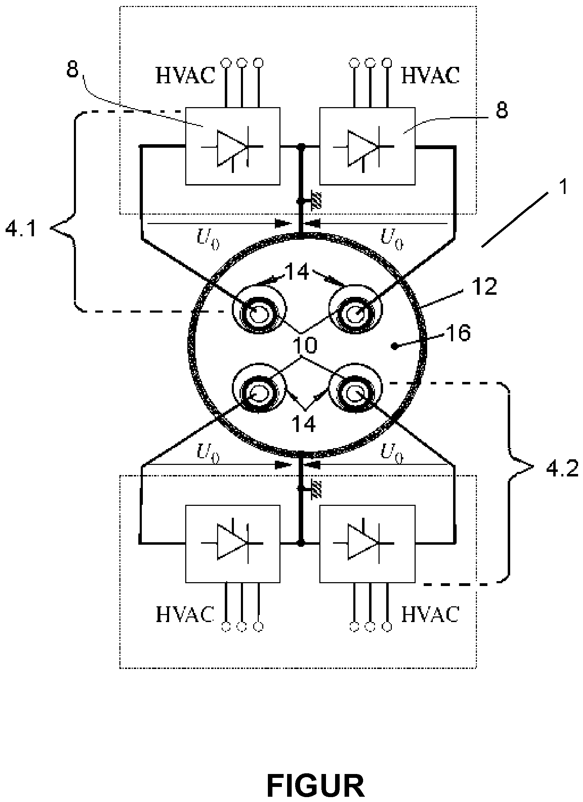

Die Erfindung wird in der einzigen Figur zeichnerisch erläutert.

Die einzige Figur zeigt ein Beispiel einer Gleichstrom-Kabelanlage 1 mit bipolarer Zweipolverbindung und mit Rückleitung über das Stahlrohr.

Der Rückleiterstrom ist über die Rohrwandung des Stahlrohrs 12 geführt. Es sind zwei HVDC-Systeme 4.1 und 4.2 mit entsprechenden Umrichtern 8, insbesondere zur Umrichtung in/von HVAC, dargestellt, bei dem vier, d.h. zwei Paare, kunststoffisolierte Gleichstromkabel 10 in dem gemeinsamen Hüllrohr 12 angeordnet sind. Die Gleichstromkabel 10 liegen je in einem Kunststoffrohr 14. Der Raum 16 zwischen den Kunststoffrohren und dem Hüllrohr kann mit Beton gefüllt sein.

Beispielsweise könnten die beiden HVDC-Systeme 4.1 und 4.2 für eine Leistung von je 2.000 MV und einer Hochspannung Uₒ von 525 kV ausgelegt sein. Ein Leiter eines Systems (4.1) weist gegenüber dem Erdpotential eine positive Spannung Uₒ auf, der andere Leiter weist gegenüber dem Erdpotential eine negative Spannung Uₒ auf. Die beiden Leiter jeden HVDC-Systems 4.1 und 4.2 sind auf mittlerem Potential geerdet. Der Rückleiter führt bei bipolaren Anlagen keinen Betriebsstrom, sondern nur einen kleinen Ausgleichstrom.

Nach diesem zuvor formulierten Beispiel würden Gleichstromkabel mit einem Kupferquerschnitt von (etwa) 2.500 mm² eingesetzt werden. Erfindungsgemäß wird ein Stahlrohr verwendet, welches einen Leiterquerschnitt aufweist, der dem Leiterquerschnitt eines Gleichstromkabels entspricht. In diesem Fall weist die Rohrwandung einen Querschnitt von (etwa) 20.000 mm² auf. Das Stahlrohr würde bei einem Durchmesser von 1500 mm mit entsprechenden Wanddicke ausgelegt sein.

Zusammenfassend wird die Erfindung kurz wie folgt dargestellt: Es wird eine Gleichstrom-Kabelanlage und die Bereitstellung einer solchen vorgeschlagen, vorzugsweise für Hochspannung, die ohne Erd-Elektroden für die Rückleitung, bzw. ohne kabelgebundenen Rückleiter auskommt und bei der ein metallischer Rückleiter als metallisches Hüllrohr 12 ausgebildet ist, in welches, insbesondere paarweise, Gleichstromkabel 10 eingezogen sind.

Vorzugsweise ist das metallische Rohr als Stahlrohr mit außenflächigem und innenseitigem Korrosionsschutz ausgebildet. Im Stahlrohr können weiterhin Kunststoffrohre 14 zur Aufnahme von einem oder mehreren Gleichstrom-Kabeln 10 eingebracht sein, wobei die Zwischenräume 16 zwischen dem mindestens einen Kunststoffrohr und dem Hüllrohr mit gut wärmeleitfähigem Material verfüllt sind. Neben den Kunststoffrohren können noch Leerrohre im Hüllrohr vorhanden sein. Ein solcher Systemaufbau erlaubt im Fehlerfall den schnellen Austausch ganzer Kabellängen.

### Bezugszeichen:

- 1: Gleichstromkabelanlage
- 4.1: HVDC-System
- 4.2: HVDC-System
- 8: Umrichter
- 10: Gleichstromkabel
- 12: metallisches Rohr (Stahlrohr)
- 14: Kunststoffrohr (auch Leerrohr)
- 16: Zwischenraum
- Uₒ: Spannung
- HVDC: Hochspannungsgleichstrom
- HVAC: Hochspannungswechselstrom

## Patentansprüche

1. Verfahren zur Bereitstellung einer Gleichstrom-Kabelanlage, umfassend mindestens ein Gleichstromkabel (10) und mindestens einen metallischen Rückleiter, mit folgenden Verfahrensschritten:
- Bereitstellen mindestens eines Gleichstromkabels (10),
- Bereitstellen mindestens eines metallischen Hüllrohrs (12),
- Verlegen des Hüllrohrs (12),
- Einziehen des mindestens einen Gleichstromkabels (10) in das als metallischer Rückleiter dienende metallische Hüllrohr (12), und Führen eines Rückleiterstroms über die Rohrwandung des Hüllrohrs (12).

2. Verfahren zur Bereitstellung einer Gleichstrom-Kabelanlage nach Anspruch 1, **dadurch gekennzeichnet, dass** eine mehrere Gleichstromkabel (10) umfassende Gleichstrom-Kabelanlage für Hochspannung bereitgestellt wird und die Gleichstromkabel getrennt voneinander in ein gemeinsames metallisches Hüllrohr (12) oder in mehrere metallische Hüllrohre (12) eingezogen werden.

3. Verfahren zur Bereitstellung einer Gleichstrom-Kabelanlage nach Anspruch 1 oder 2, **dadurch gekennzeichnet, dass** die Gleichstrom-Kabelanlage als erdverlegte Gleichstrom-Kabelanlage bereitgestellt wird.

4. Verfahren zur Bereitstellung einer Gleichstrom-Kabelanlage nach einem der vorhergehenden Ansprüche, **dadurch gekennzeichnet, dass** die Kabelanlage als bipolare Übertragungsstrecke (4.1, 4.2) betrieben wird.

5. Verfahren zur Bereitstellung einer Gleichstrom-Kabelanlage nach einem der vorhergehenden Ansprüche, **dadurch gekennzeichnet, dass** im metallischen Rohr (12) mindestens ein Kunststoffrohr (14) eingebracht wird, in welches das mindestens eine Gleichstromkabel (10) eingezogen wird.

6. Verfahren zur Bereitstellung einer Gleichstrom-Kabelanlage nach Anspruch 5, **dadurch gekennzeichnet, dass** in dem mindestens einen Kunststoffrohr (14) weitere elektrische Leiter bzw. Kabel verlegt werden.

7. Verfahren zur Bereitstellung einer Gleichstrom-Kabelanlage nach einem der Ansprüche 5 oder 6, **dadurch gekennzeichnet, dass** die Zwischenräume (16) zwischen dem mindestens einen Kunststoffrohr (14) und dem metallischen Rohr (12) mit gut wärmeleitfähigem Material verfüllt werden.

8. Verfahren zur Bereitstellung einer Gleichstrom-Kabelanlage nach einem der vorhergehenden Ansprüche, **dadurch gekennzeichnet, dass** die Größe des Leiterquerschnitts des metallischen Rohrs (12) dem Leiterquerschnitt des in der Übertragungsstrecke eingesetzten Gleichstromkabels (10) entsprechend dem Leitwertverhältnis der beiden Metalle angepasst wird.

9. Verfahren zur Bereitstellung einer Gleichstrom-Kabelanlage nach einem der vorhergehenden Ansprüche, **dadurch gekennzeichnet, dass** das metallische Rohr (12) aus Stahl bereitgestellt und die Außenseite des Rohrs (12) mit Korrosionsschutz versehen wird.

10. Verfahren zur Bereitstellung einer Gleichstrom-Kabelanlage nach einem der vorhergehenden Ansprüche, **dadurch gekennzeichnet, dass** das metallische Rohr (12) mit einem Innendurchmesser bereitgestellt wird, der Raum für einen begehbaren Leitungsgang bietet.

11. Gleichstrom-Kabelanlage, umfassend mindestens ein Gleichstromkabel (10) und mindestens einen metallischen Rückleiter (12), insbesondere bereitgestellt nach einem der in den Ansprüchen 1 bis 10 formulierten Verfahren, **dadurch gekennzeichnet,**
• **dass** der mindestens eine Rückleiter als metallisches Hüllrohr (12) ausgebildet ist, über dessen Rohrwandung ein Rückleiterstrom führbar ist,
• und **dass** das mindestens eine Gleichstromkabel (10) in das Hüllrohr (12) eingebracht ist, und
• insbesondere, dass das mindestens eine Gleichstromkabel (10) keinen kabelgebundenen Rückleiter aufweist.

12. Gleichstrom-Kabelanlage nach Anspruch 11, **dadurch gekennzeichnet, dass** mehrere Gleichstromkabel (10) als Übertragungsstrecke (4.1, 4.2) ein Hochspannungskabelsystem bilden, und die Gleichstromkabel (10) getrennt in ein oder mehrere metallische Hüllrohre (12) eingezogen sind.

13. Gleichstrom-Kabelanlage nach Anspruch 11 oder 12, **dadurch gekennzeichnet, dass** die Übertragungsstrecke als bipolare Kabelanlage (4.1, 4.2) ausgestaltet ist.

14. Gleichstrom-Kabelanlage nach einem der Ansprüche 11 bis 13, **dadurch gekennzeichnet, dass** im metallischen Rohr (12) mindestens ein Kunststoffrohr (14) eingebracht ist, in welches das mindestens eine Gleichstromkabel (10) eingezogen ist.

15. Gleichstrom-Kabelanlage nach Anspruch 14, **dadurch gekennzeichnet, dass** in dem mindestens einen Kunststoffrohr (14) weitere elektrische Leiter bzw. Kabel verlegt sind.

16. Gleichstrom-Kabelanlage nach einem der Ansprüche 14 oder 15, **dadurch gekennzeichnet, dass** die Zwischenräume zwischen dem mindestens einen Kunststoffrohr (14) und dem metallischen Hüllrohr (12) mit gut wärmeleitfähigem Material verfüllt sind.

17. Gleichstrom-Kabelanlage nach einem der Ansprüche 11 bis 16, **dadurch gekennzeichnet, dass** die Größe eines Leiterquerschnitts eines metallischen Hüllrohrs (12) gemäß dem Querschnitt eines metallischen Leiters des in das Hüllrohr (12) eingezogenen Gleichstromkabels (10) entsprechend dem Leitwertverhältnis der beiden Metalle gewählt ist.

18. Gleichstrom-Kabelanlage nach einem der Ansprüche 11 bis 17, **dadurch gekennzeichnet, dass** das metallische Hüllrohr (12) aus Stahl ist und die Außenseite des Hüllrohrs (12) mit Korrosionsschutz versehen ist.

19. Gleichstrom-Kabelanlage nach einem der Ansprüche 11 bis 18, **dadurch gekennzeichnet, dass** das metallische Hüllrohr (12) einen Innendurchmesser aufweist, der Raum für einen begehbaren Leitungsgang hat.
